# EUROPEAN PATENT APPLICATION

(11) **EP 3 786 679 A1**
(43) Date of publication of application: **03.03.2021**
(21) Application number: 20160271.1
(22) Date of filing: 28.02.2020
(51) Int. Cl.: G02B 6/44

(54) **BENDABLE OPTICAL FIBRE CABLE**

(30) Priority: 30.08.2019 IN 201911035055
(71) Applicant: Sterlite Technologies Limited, Haryana 122002 (IN)
(72) Inventor: Kumar, Sravan, 122002 Gurgaon (IN); Mittal, Manoj, 122002 Gurgaon (IN)
(74) Representative: Hepworth Browne

(57) **Abstract**

The present disclosure provides a bendable optical fibre cable (100) with high bending performance. The bendable optical fibre cable (100) of the present disclosure includes plurality of buffer tubes (102), one or more ribbon stacks (104), the inner layer (106), the outer sheath (108), plurality of strength members (110), one or more water, swellable yarns (112) and plurality of ripcords (114). The one or more ribbon stacks (104) includes the plurality of optical fibers. In addition, the outer sheath (108) is made up of a composite material characterized with low flexural modulus. The composite material has a base compound. The base compound of the composite material of the outer sheath (108) includes polyethylene.

## Description

### Field of the Invention

The present disclosure relates to the field of optical fibre cable and, in particular, relates to a bendable optical fibre cable for easy handling.

### Background of the invention

Optical fibre cables have secured an important position in building network of modern communication systems across the world. The optical fibre cables are sensitive to conditions like crushes, kinks, bends and grooves. Specifically, the optical fibre cables with high fibre count are more sensitive to bends as the size of the optical fibres in the optical fibre cables is big. Further, installation of the optical fibre cables at sharp grooves requires large amount of bending. Due to the large amount of bending, compressive strains are generated inside the optical fibre cables that further creates signal transmission losses. Furthermore, the optical fibre cable with high fibre count has large diameter. Moreover, the large diameter of the optical fibre cable makes handling of the optical fibre cables challenging during installation in manholes. Also, installation of the optical fibre cables with large diameter requires lot of man power to hold the optical fibre cables tightly to place them inside the manholes.

In light of the above stated discussion, there is a need for a bendable optical fibre cable that overcomes the above stated disadvantages.

### SUMMARY OF THE INVENTION

The present disclosure provides a bendable optical fibre cable. The bendable optical fibre cable includes one or more ribbon stacks. The one or more ribbon stacks includes the plurality of optical fibers. The bendable optical fibre cable includes the outer sheath. The outer sheath is made up of a composite material characterized with low flexural modulus. The composite material has a base compound.

A primary object of the present disclosure is to provide a bendable optical fibre cable with high bending performance.

Another object of the present disclosure is to provide the bendable optical fibre cable possessing outer jacket having lower flexural modulus.

Yet another object of the present disclosure is to provide the bendable optical fibre cable with low bend radius.

In an embodiment of the present disclosure, the outer sheath of the bendable optical fibre cable is characterized by flexural modulus in range of about 50 megapascals to 500 megapascals.

In an embodiment of the present disclosure, the base compound of the composite material of the outer sheath includes polyethylene.

In an embodiment of the present disclosure, the plurality of polymers in base compound of the composite material of the outer sheath facilitates reduction in flexural modulus of the outer sheath. In addition, the plurality of polymers in base compound of the composite material of the outer sheath includes at least one of low smoke zero halogen and thermoplastic polyurethane.

In an embodiment of the present disclosure, the bendable optical fibre cable includes plurality of strength members. In addition, each of plurality of strength members is characterized by diameter in range of about 0.9 millimeter to 1.4 millimeter for enabling high bending performance.

In an embodiment of the present disclosure, the bendable optical fibre is characterized by bend radius of about 7.5 D.

In an embodiment of the present disclosure, the one or more ribbon stacks is one of a conventional ribbon, a rollable ribbon and an intermittent bonded ribbon. In addition, plurality of optical fibers of each of the one or more ribbon stacks is loose optical fibers.

In an embodiment of the present disclosure, the bendable optical fibre cable includes an inner layer. In addition, the inner layer is characterized by thickness of about 0.1 millimeter to 0.5 millimeter.

In an embodiment of the present disclosure, the bendable optical fibre cable has outer sheath thickness. In addition, the outer sheath thickness has thickness range of about 1.4 millimeter to 3 millimeter.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:

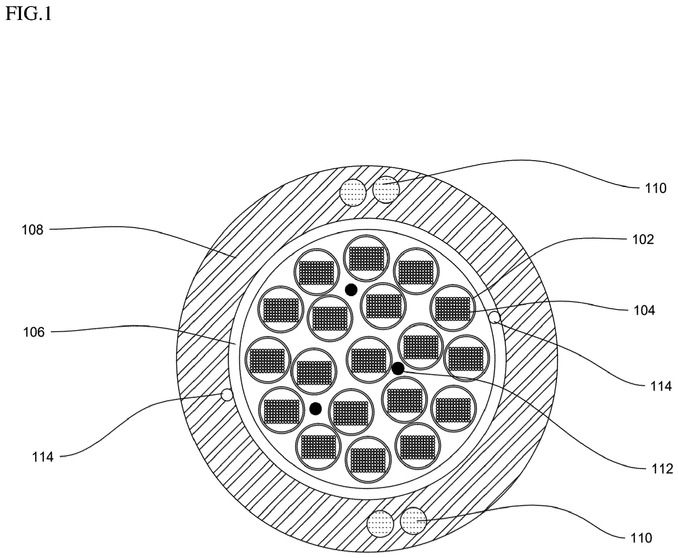

FIG. 1 illustrates a cross sectional view of a bendable optical fibre cable, in accordance with various embodiments of the present disclosure.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. The bendable optical fibre cable.
102. Plurality of buffer tubes.
104. One or more ribbon stacks.
106. The inner layer.
108. The outer sheath.
110. Plurality of strength members.
112. One or more water swellable yarns.
114. Plurality of ripcords.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

Referring to FIG. 1, this is a cross sectional view of a bendable optical fibre cable 100, in accordance with various embodiments of the present disclosure. In general, optical fibre cable is a medium for transmission of data at high speed over long distances. In addition, optical fibre cable is a network cable that contains multiple optical fibres inside an insulated casing. Further, optical fibre cable is used in campus, building, data center backbone applications and the like. Furthermore, the optical fibre cable is suitable for installation in aerial, duct, and direct buried applications.

The bendable optical fibre cable 100 includes a plurality of buffer tubes 102, one or more ribbon stacks 104, an inner layer 106, an outer sheath 108 and a plurality of strength members 110. In addition, the bendable optical fibre cable 100 includes one or more water swell-able yarns 112 and a plurality of ripcords 114.

The bendable optical fibre cable 100 includes the plurality of buffer tubes 102. In general, buffer tubes provide mechanical isolation to fibres present in buffer tubes. Each of the plurality of buffer tubes 102 may include plurality of loose optical fibers, a conventional ribbons, a rollable ribbons or intermittent bonded ribbons. In an example, the one or more ribbon stacks 104 includes a plurality of ribbons. In an embodiment of the present disclosure, the plurality of buffer tubes 102 correspond to loose tubes with reduced diameter. In an embodiment of the present disclosure, cross section of each of the plurality of buffer tubes 102 is circular in shape. In another embodiment of the present disclosure, shape of the plurality of buffer tubes 102 may vary. In addition, each of the plurality of buffer tubes 102 is characterized by a diameter. The diameter of each of the plurality of buffer tubes 102 varies with change in design of the bendable optical fibre cable 100. In an embodiment of the present disclosure, the plurality of buffer tubes 102 provides mechanical isolation to each ribbon of the one or more ribbon stacks 104. In addition, the plurality of buffer tubes 102 provides protection to each ribbon of the one or more ribbon stacks 104 from physical damage.

Each ribbon of the one or more ribbon stacks 104 includes a plurality of optical fibres. In general, an optical fibre refers to medium associated with transmission of information over long distances in the form of light pulses. In addition, the optical fibre is a type of cabling technology that uses light to transmit voice and data communications over long distances. In an embodiment of the present disclosure, each ribbon of the one or more ribbon stacks 104 includes 12 optical fibres. In another embodiment of the present disclosure, number of the plurality of optical fibres in each ribbon of the one or more ribbon stacks 104 may vary.

The bendable optical fibre cable 100 includes the inner layer 106. The inner layer 106 surrounds the plurality of buffer tubes 102. The inner layer 106 is made up of water blocking tape. In general, water blocking tape is designed to block ingression of water inside optical fibre cables. In an embodiment of the present disclosure, the inner layer 106 prevents ingression of water and moisture inside the plurality of buffer tubes 102. In an embodiment of the present disclosure, the inner layer 106 has a thickness of about 0.1 millimeter to 0.5 millimeter. In another embodiment of the present disclosure, the thickness of the inner layer 106 may vary.

The bendable optical fibre cable 100 includes the outer sheath 108. The outer sheath 108 surrounds the inner layer 106. The outer sheath 108 is a jacket layer. In general, jacket protects cable against crush, pressure and tensile stress. In an embodiment of the present disclosure, the outer sheath 108 is made up of a composite material. In addition, the composite material that is characterized with low flexural modulus. In addition, the composite material includes polyethylene base compound. In addition, polyethylene base compound includes a plurality of polymers. The plurality of polymers includes but may not be limited to low smoke zero halogen material and thermoplastic polyurethane. In another embodiment of the present disclosure, the outer sheath 108 is made of any suitable material.

Further, the outer sheath 108 of the bendable optical fibre cable 100 is characterized by flexural modulus. The plurality of polymers is added with the base compound that reduces flexural modulus of the outer sheath 108. In addition, reduction in flexural modulus of the outer sheath 108 of the bendable optical fibre cable 100 increases flexibility and bending performance of the bendable optical fibre cable 100. In general, flexural modulus of a material is a physical property that denotes ability for that material to bend. In mechanical terms, flexural modulus is ratio of stress to strain during a flexural deformation or bending. In an embodiment of the present disclosure, the outer sheath 108 of the bendable optical fibre cable 100 has flexural modulus in a range of about 50 megapascals to 500 megapascals. In another embodiment of the present disclosure, the range of flexural modulus of the outer sheath 108 of the bendable optical fibre cable 100 may vary. In an embodiment of the present disclosure, the outer sheath 108 provides stiffness, rigidity, and resistance to the bendable optical fibre cable 100. In an embodiment of the present disclosure, the outer sheath 108 of the bendable optical fibre cable 100 has a thickness of about 1.4 millimeter to 3 millimeters. In another embodiment of the present disclosure, the thickness of the outer sheath 108 may vary.

The bendable optical fibre cable 100 includes the plurality of strength members 110. Each of the plurality of strength members 110 is embedded in the outer sheath 108 of the bendable optical fibre cable 100. In general, embedded strength members provide high tensile strength and anti-buckling property to cables. The plurality of strength members 110 provides strength and durability to the bendable optical fibre cable 100. In addition, the plurality of strength members 110 has high mechanical strength and provides protection to the bendable optical fibre cable 100. In general, strength members are used in aerospace, automotive, marine, construction industries and the like. In an embodiment of the present disclosure, each of the plurality of strength members 110 is made of fibre reinforced plastic material. In another embodiment of the present disclosure, each of the plurality of strength members 110 is made of any other suitable material. In an embodiment of the present disclosure, each member of the plurality of strength members 110 has diameter in a range of about 0.9 millimeter to 1.4 millimeter in order to have high bending performance. In another embodiment of the present disclosure, the plurality of strength members 110 has diameter of any suitable range. In an embodiment of the present disclosure, number of the plurality of strength members 110 is four. In another embodiment of the present disclosure, the number of the plurality of strength members 110 may vary. In an embodiment of the present disclosure, the plurality of strength members 110 includes two pair of strength members. In an embodiment of the present disclosure, each pair of the plurality of strength members 110 is positioned at an equal distance to each other along the circumference of the outer sheath 108 of the bendable optical fibre cable 100.

The bendable optical fibre cable 100 includes the one or more water swellable yarns 112. The one or more water swellable yarns 112 are positioned along with the plurality of buffer tubes 102. The one or more water swellable yarns 112 prevent ingression of water inside the bendable optical fibre cable 100. In an embodiment of the present disclosure, number of the one or more water swellable yarns 112 is three. In another embodiment of the present disclosure, number of the one or more water swellable yarns 112 may vary.

The bendable optical fibre cable 100 includes the plurality of ripcords 114. In an embodiment of the present disclosure, the plurality of ripcords 114 is positioned diametrically opposite in between the inner layer 106 and the outer sheath 108. The plurality of ripcords 114 facilitates stripping of the outer sheath 108. In an embodiment of the present disclosure, each of the plurality of ripcords 114 has a circular cross-section. In an embodiment of the present disclosure, number of the plurality of ripcords 114 is 2. In another embodiment of the present disclosure, the number of the plurality of ripcords 114 may vary. In an embodiment of the present disclosure, each of the plurality of ripcords 114 is made of polyester. In another embodiment of the present disclosure, each of the plurality of ripcords 114 is made up of any other suitable material.

The bendable optical fibre cable 100 has minimum bend radius. In general, bend radius is a radius at which an optical fibre cable can bend without sustaining damage. In an embodiment of the present disclosure, the bendable optical fibre cable 100 has bend radius of about 7.5 D. In another embodiment of the present disclosure, bend radius of the bendable optical fibre cable 100 may vary. The unit 7.5 D represents that bend radius is 7.5 times the diameter of the bendable optical fibre cable 100. In an example, the bendable optical fibre cable 100 has a length of 25 millimeter. In addition, the bendable optical fibre cable 100 has bend radius of about 188 D corresponding to 25-millimeter length of the bendable optical fibre cable 100. Further, minimum bend radius of the bendable optical fibre cable 100 allows easy handling of the bendable optical fibre cable 100 during coiling inside manholes. In general, coiling or coil is a curve, helix, or spiral used for storing rope or cable in compact and reliable form.

Comparing the prior art of the present disclosure, the bendable optical fibre cable has numerous advantages over the prior art. The bendable optical fibre cable is easy to handle during coiling inside manholes. In addition, the bendable optical fibre cable has minimum bend radius. Further, the bendable optical fibre cable has low flexural modulus that allows bending of the bendable optical fibre cable and make the bendable optical fibre cable flexible.

Although, the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

## Claims

1. A bendable optical fibre cable (100) comprising:
one or more ribbon stacks (104), wherein each of the one or more ribbon stacks (104) comprises a plurality of optical fibers; and
an outer sheath (108) **characterized in that** the outer sheath is made up of a composite material characterized with low flexural modulus, wherein the composite material has a base compound.

2. The bendable optical fibre cable (100) as claimed in claim 1, the outer sheath (108) of the bendable optical fibre cable (100) is **characterized by** flexural modulus in range of 50 megapascals to 500 megapascals.

3. The bendable optical fibre cable (100) as claimed in claim 1 or 2, wherein the base compound of the composite material of the outer sheath (108) comprises polyethylene.

4. The bendable optical fibre cable (100) as claimed in any preceding claim, wherein the base compound of the composite material of the outer sheath (108) comprises a plurality of polymers, wherein the plurality of polymers in base compound of the composite material of the outer sheath (108) facilitates reduction in flexural modulus of the outer sheath (108), wherein the plurality of polymers in base compound of the composite material of the outer sheath (108) comprises at least one of low smoke zero halogen and thermoplastic polyurethane.

5. The bendable optical fibre cable (100) as claimed in any preceding claim, wherein the bendable optical fibre cable (100) comprises a plurality of strength members (110), wherein each member of the plurality of strength members (110) is **characterized by** diameter in range of 0.9 millimeter to 1.4 millimeter for enabling high bending performance.

6. The bendable optical fibre cable (100) as claimed in any preceding claim, wherein the bendable optical fibre cable (100) is **characterized by** bend radius of 7.5 D.

7. The bendable optical fibre cable (100) as claimed in any preceding claim, wherein the one or more ribbon stacks (104) is one of a conventional ribbon, a rollable ribbon and an intermittent bonded ribbon, wherein the plurality of optical fibers of each of the one or more ribbon stacks (104) is loose optical fibers.

8. The bendable optical fibre cable (100) as claimed in any preceding claim, further comprising an inner layer (106), wherein the inner layer (106) is **characterized by** thickness of 0.1 millimeter to 0.5 millimeter.

9. The bendable optical fibre cable (100) as claimed in any preceding claim, wherein thickness of the outer sheath (108) is in range of 1.4 millimeter to 3 millimeter.

10. A bendable optical fibre cable (100) comprising:
one or more ribbon stacks (104), wherein each of the one or more ribbon stacks (104) comprises a plurality of optical fibers; and
an outer sheath (108) **characterized in that** the outer sheath is made up of a composite material characterized with flexural modulus of 50 megapascals to 500 megapascals.

11. The bendable optical fibre cable (100) as claimed in claim 10, wherein the composite material further comprising polyethylene.

12. The bendable optical fibre cable (100) as claimed in claim 10 or 11, wherein the base compound of the composite material of the outer sheath (108) comprises a plurality of polymers, wherein the plurality of polymers in base compound of the composite material of the outer sheath (108) facilitates reduction in flexural modulus of the outer sheath (108), wherein the plurality of polymers in base compound of the composite material of the outer sheath (108) comprises at least one of low smoke zero halogen and thermoplastic polyurethane.

13. The bendable optical fibre cable (100) as claimed in any of claims 10 to 12, wherein the bendable optical fibre cable (100) is **characterized by** bend radius of 7.5 D.

14. The bendable optical fibre cable (100) as claimed in any of claims 10 to 13, further comprising an inner layer (106), wherein the inner layer (106) is **characterized by** thickness of 0.1 millimeter to 0.5 millimeter.

15. The bendable optical fibre cable (100) as claimed in any of claims 10 to 14, wherein thickness of the outer sheath (108) is in range of 1.4 millimeter to 3 millimeter.
